# EUROPEAN PATENT SPECIFICATION

(11) **EP 4 305 958 B1**
(45) Date of publication and mention of the grant of the patent: **25.06.2025**
(21) Application number: 21930226.2
(22) Date of filing: 12.03.2021
(51) Int. Cl.: A01K 61/95, A01K 61/80, G06Q 50/02, G06Q 10/06

(54) **INFORMATION PROCESSING PROGRAM, INFORMATION PROCESSING METHOD, AND INFORMATION PROCESSING DEVICE**
INFORMATIONSVERARBEITUNGSPROGRAMM, INFORMATIONSVERARBEITUNGSVERFAHREN UND INFORMATIONSVERARBEITUNGSVORRICHTUNG
PROGRAMME DE TRAITEMENT D'INFORMATIONS, PROCÉDÉ DE TRAITEMENT D'INFORMATIONS ET DISPOSITIF DE TRAITEMENT D'INFORMATIONS

(43) Date of publication of application: 17.01.2024
(73) Proprietor: Softbank Corp., Tokyo 105-7529 (JP)
(72) Inventor: ISHIWAKA, Yuko, Tokyo 105-7529 (JP)
(74) Representative: SSM Sandmair
(86) International application number: PCT/JP2021/010159
(87) International publication number: WO 2022/190375

(56) References cited:
- WO-A1-2021/038753
- CN-A- 112 213 962
- JP-A- 2019 135 986
- JP-A- 2020 078 278
- JP-A- 2020 078 278
- JP-A- H09 262 040
- JP-A- H09 262 040
- TYLER J A ET AL: "Do spatial models of growth rate potential reflect fish growth in a heterogeneous environment? A comparison of model results", ECOLOGY OF FRESHWATER FISH, JOHN WILEY & SONS, INC, HOBOKEN, USA, vol. 10, no. 1, 20 December 2001 (2001-12-20), pages 43 - 56, XP071773457, ISSN: 0906-6691, DOI: 10.1034/J.1600-0633.2001.100106.X

## Description

### Field

The present invention relates to an information processing program, an information processing method, and an information processing apparatus.

### Background

Various techniques for improving fish cultivation technology have been known conventionally. For example, preset feature values that change according to the number of fish (also referred to as a fish count) are extracted from a captured image having, captured therein, fish in a fishpond. In a known technique, the extracted feature values are matched against a trained model obtained by machine learning, the trained model corresponding to relational data between feature values and fish counts, and a fish count is detected from the trained model.

### Citation List

### Patent Literature

Patent Literature 1: Japanese Patent No. 6787471

"Do spatial models of growth rate potential reflect fish growth in a heterogeneous environment? A comparison of model results"(TYLER J A ET AL, ECOLOGY OF FRESHWATER FISH, JOHN WILEY & SONS, INC, HOBOKEN, USA, (2001-12-20), vol. 10, no. 1, pages 43 - 56) discusses spatial model of fish growth rate potential and discloses correlation between growth rate potential and number of model fish per cell in corroboration simulations and maximum number of fish in a cell (cf. Table 2), and analysis of variance of the effect of zooplankton density, fish number and water temperature field on average simulated fish growth and the environmental average growth rate potential in the factorial simulation experiment (cf. Table 3).

### Summary

### Technical Problem

However, the above mentioned conventional technique is merely for detection of a fish count in a fishpond and does not necessarily enable improvement of the fish cultivation technology.

### Solution to Problem

The present invention is defined by the independent claims. Further embodiments of the present invention are described in the dependent claims.

### Brief Description of Drawings

FIG. 1 is a diagram for explanation of an outline of information processing according to an embodiment.
FIG. 2 is diagram illustrating an example of a configuration of an information processing apparatus according to the embodiment.
FIG. 3 is diagram illustrating an example of individual predatory behavior parameters and small fish group predatory behavior parameters, according to the embodiment.
FIG. 4 is a diagram illustrating an example of training data for a machine learning model for estimation of a fish count in a fishpond, according to the embodiment.
FIG. 5 is a diagram illustrating an example of a process of generating the machine learning model for the estimation of a fish count in a fishpond, according to the embodiment.
FIG. 6 is a diagram illustrating an example of a process of correcting values of Boids parameters, according to the embodiment.
FIG. 7 is a diagram illustrating an example of feeding simulations, according to the embodiment.

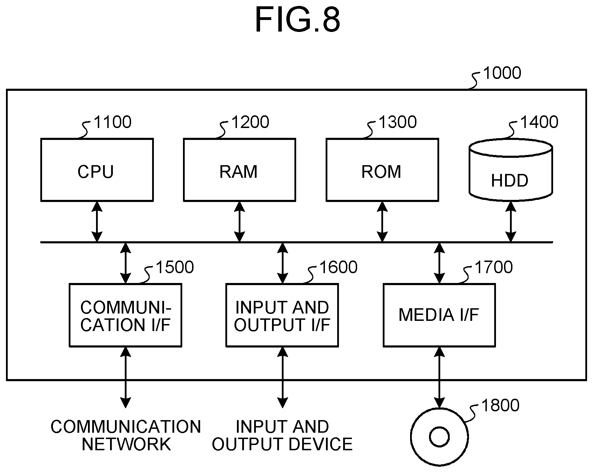

FIG. 8 is a diagram of a hardware configuration representing an example of a computer that implements functions of the information processing apparatus. Description of Embodiments

Modes for implementing an information processing program, an information processing method, and an information processing apparatus, according to the present application (hereinafter, referred to as "embodiments") will hereinafter be described in detail while reference is made to the drawings. The information processing program, the information processing method, and the information processing apparatus, according to the present application are not limited by these embodiments. For the following embodiments, the same reference sign will be assigned to parts that are the same and redundant explanation thereof will be omitted.

### Embodiments

### 1. Introduction

There have conventionally been various problems related to feeding in farms. Specifically, these problems include waste of feed in feeding. For example, in a case where feed is tossed to a fishpond or culture pond (hereinafter, referred to as a fishpond) where fish, which are a target to be cultivated, are swimming, tossing a large quantity of feed to one place in the fishpond, for example, at once may cause: accumulation, at the bottom of the fishpond, of feed not predated by the fish; and thus waste of the feed. Furthermore, fish have a habit of gathering at a place where feed is always tossed when the fish are fed. Therefore, even if feed is tossed spatially evenly to a fishpond, for example, instead of being tossed in large quantity at one place in the fishpond at once, the feed tossed to places different from the place where feed is always tossed may not be predated by the fish and may thus be wasted.

Furthermore, the problems include an outbreak of disease or death of all the fish due to excessive feeding. For example, feeding too much may cause deterioration in water quality of the fishpond, the deterioration being due to feces of the fish and leftover feed. The deterioration in water quality weakens the fish due to lack of oxygen. In addition, too much feeding may cause indigestion or disease.

The problems also include variation in the price of fish even for the same fish catch because the fish have different sizes. In general, the size of fish is proportional to the quantity of feed predated by the fish. Therefore, making the size of fish uniform requires a uniform quantity of feed to be predated by each of many fish in a fishpond, for example, as far as possible. However, it may sometimes be difficult to make a uniform quantity of feed to be predated by each of many fish in a fishpond, for example. For example, in a case where feed is tossed to a fishpond, it is considered that there is a higher probability of surface fish predating the feed, the surface fish being at positions near the water surface of the fishpond. It is considered, on the other hand, that there is a lower probability of bottom fish predating the feed, the bottom fish being at positions near the bottom of water in the fishpond, because much of the feed is predated by those fish at the positions near the water surface. Therefore, even if many fish that are in the same fishpond, for example, are fed by the same feeding method, these many fish will vary in size.

By contrast, an information processing apparatus 100 according to the present application obtains values of individual predatory behavior parameters indicating features of predatory behavior for feed by an individual fish, values of small fish group predatory behavior parameters indicating features of predatory behavior for feed by an individual fish belonging to a small fish group (for example, a group of five fish) including a small number of individual fish, and values of feeding parameters indicating features of a feeding method for a large fish group (for example, a group of 100 fish) including a large number of individual fish, the large number being larger than the small number. Furthermore, on the basis of the values of the individual predatory behavior parameters, the values of the small fish group predatory behavior parameters, and the values of the feeding parameters, which have been obtained, the information processing apparatus 100 performs a simulation of growth of each individual fish belonging to the large fish group fed by a feeding method corresponding to the values of the feeding parameters.

The optimum values of the feeding parameters (that is, the optimum feeding method) are thereby able to be found, the optimum values solving the above described various problems related to feeding in farms. For example, the information processing apparatus 100 enables a feeding method to be found, the feeding method minimizing variation in size among individual fish that have grown in the shortest period of time. Therefore, the information processing apparatus 100 enables improvement of the fish cultivation technology.

Types of dimensions indicating sizes of fish include the total length, standard length (body length), fork length, body depth, and body width, of the fish. The "size of fish" referred to in the specification of the present application is a concept including sizes of fish measured by any of dimensions including the total length, standard length (body length), fork length, body depth, and body width, of the fish.

### 2. Outline of Information Processing

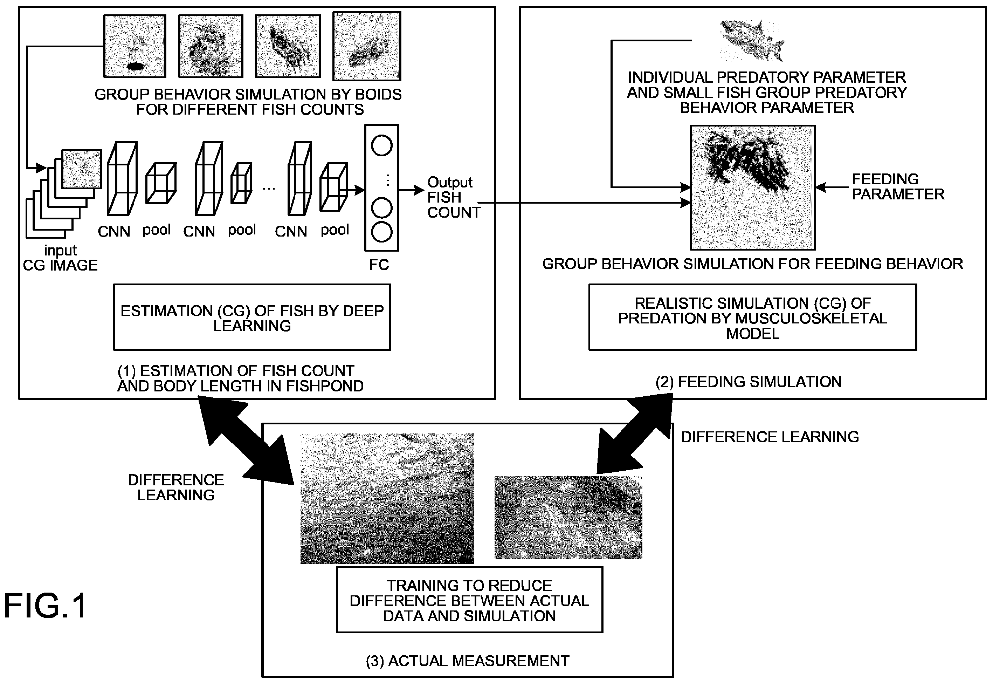

An outline of information processing according to an embodiment will be described hereinafter by use of FIG. 1. FIG. 1 is an explanatory diagram illustrating the outline of the information processing according to the embodiment.

As illustrated at the upper left of FIG. 1, the information processing apparatus 100 performs simulations (Boids simulations) of group behavior by Boids for different fish counts. Boids herein means a collection of objects (Boids) each representing an individual fish, the collection moving like a group of fish. Boids is also the name of a program that enables a simulation of movement of a group just by setting of three rules on cohesion, separation, and alignment.

Of these three rules in Boids, "cohesion" is a force for individuals to move closer to each other to avoid becoming separate from each other, "separation" is a force for the individuals to separate from each other to avoid colliding with each other, and "alignment" is a force for directions to be aligned with each other, the directions being directions in which the individuals move as a group. The total of these three forces determines movement of the individuals. For each of these three forces, the magnitude of the force, the range over which the force is exerted, and the angle of the force may be set as parameters (hereinafter, also referred to as Boids parameters). For example, Boids parameters are determined by the size of space in which the group is, the sizes of the individuals, and the density of the individuals. In a case described hereinafter, an "individual" in Boids is an individual fish and a "group" is a group of individual fish (a fish group).

Description of FIG. 1 will now be resumed. The information processing apparatus 100 estimates a fish count in a large fish group and a body length of fish belonging to the large fish group, from a captured image having, captured therein, the large fish group in an actual fishpond, by using a machine learning model trained to estimate fish counts in fish groups and body lengths of fish belonging to the fish groups from captured images. Furthermore, the information processing apparatus 100 generates a Boids simulation image of the large fish group by computer graphics. Subsequently, the information processing apparatus 100 corrects values of Boids parameters until a difference satisfies a preset condition and obtains corrected values of the Boids parameters that have been corrected until the condition has been satisfied, the difference being between: the captured image (actual data) having, captured therein, the large fish group (for example, a group of 100 fish) in the actual fishpond; and the Boids simulation image of the large fish group.

Furthermore, as illustrated at the upper right of FIG. 1, the information processing apparatus 100 obtains measured values of individual predatory behavior parameters indicating features of predatory behavior for feed by an individual fish, the measured values having been actually measured for each fish species, and measured values of small fish group predatory behavior parameters indicating features of predatory behavior for feed by an individual fish belonging to a small fish group (for example, a group of five fish) including a small number of individual fish. Furthermore, the information processing apparatus 100 obtains values of feeding parameters indicating features of a feeding method for a large fish group (for example, a group of 100 fish) including a large number of individual fish. For example, the information processing apparatus 100 obtains values of predetermined feeding parameters specified by a user who conducts a simulation.

Subsequently, the information processing apparatus 100 generates, by computer graphics, a group feeding simulation image of the large fish group being fed, on the basis of the measured values of the individual predatory behavior parameters, the measured values of the small fish group predatory behavior parameters, and the values of the feeding parameters, which have been obtained. Subsequently, the information processing apparatus 100 corrects values of large fish group predatory behavior parameters indicating features of predatory behavior for feed by an individual fish belonging to a large fish group until a difference satisfies a preset condition, and obtains corrected values of the large fish group predatory behavior parameters that have been corrected until the condition has been satisfied, the difference being between: a captured image (actual data) having, captured therein, the large fish group being fed, the large fish group being in the actual fishpond; and the group feeding simulation image. The large fish group predatory behavior parameters are parameters of the same type as the individual predatory behavior parameters and the small fish group predatory behavior parameters, but the values of the large fish group predatory behavior parameters are different from the values of the individual predatory behavior parameters and the values of the small fish group predatory behavior parameters, due to behavior as a large fish group.

The information processing apparatus 100 thus obtains the corrected values of the Boids parameters and the values of the large fish group predatory behavior parameters that enable a simulation close to feeding of the large fish group in the actual fishpond by performing the correction to reduce the difference between: the captured image (actual data) having, captured therein, the large fish group being fed, the large fish group being in the actual fishpond; and the simulation image. Thereafter, the information processing apparatus 100 performs a simulation of growth of each individual fish belonging to the large fish group fed by a feeding method corresponding to the values of the feeding parameters, on the basis of: the corrected values of the Boids parameters and the values of the large fish group predatory behavior parameters, which enable the simulation close to the feeding of the large fish group in the actual fishpond; and the values of the feeding parameters specified by the user who conducts the simulation.

### 3. Configuration of Information Processing Apparatus

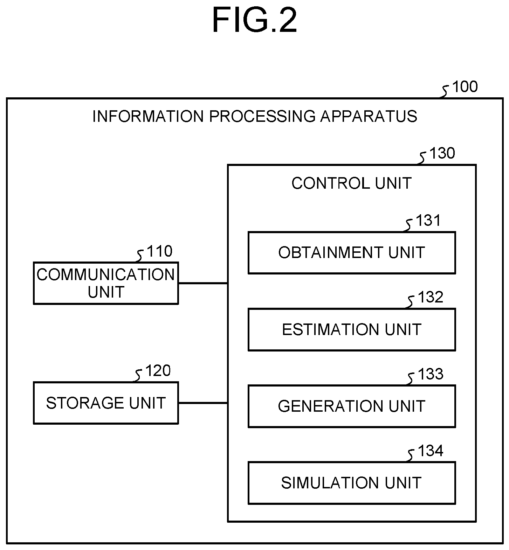

A configuration of the information processing apparatus 100 according to the embodiment will be described next by use of FIG. 2. FIG. 2 is a diagram illustrating an example of the configuration of the information processing apparatus 100 according to the embodiment. The information processing apparatus 100 may have a communication unit 110, a storage unit 120, and a control unit 130. The information processing apparatus 100 may have: an input unit (for example, a keyboard or a mouse) that receives various operations from, for example, an administrator of the information processing apparatus 100; and/or a display unit (for example, a liquid display) for various types of information to be displayed.

### Communication Unit 110

The communication unit 110 is implemented by, for example, a network interface card (NIC). The communication unit 110 is connected to a network by wire or wirelessly, and transmits and receives information to and from, for example, a terminal device used by an administrator who performs management of individuals.

### Storage Unit 120

The storage unit 120 is implemented by, for example: a semiconductor memory element, such as a random access memory (RAM) or a flash memory; or a storage device, such as a hard disk or an optical disk. Specifically, the storage unit 120 stores various programs used in simulation. For example, the storage unit 120 stores a large fish group simulation program generated by a generation unit 133.

Furthermore, the storage unit 120 stores values of various parameters used in simulation. For example, the storage unit 120 stores values of the individual predatory behavior parameters, values of the small fish group predatory behavior parameters, and values of the feeding parameters, which have been obtained by an obtainment unit 131, values of the Boids parameters obtained by an estimation unit 132, and values of the large fish group predatory behavior parameters obtained by the generation unit 133.

### Control Unit 130

The control unit 130 is a controller, and is implemented by execution of various programs (corresponding to an example of an information processing program) stored in a storage device inside the information processing apparatus 100 by, for example, a central processing unit (CPU) or a micro processing unit (MPU), with a RAM serving as a work area. Furthermore, the control unit 130 is a controller, and is implemented by, for example, an integrated circuit, such as an application specific integrated circuit (ASIC) or a field programmable gate array (FPGA).

The control unit 130 may have, as functional units, the obtainment unit 131, the estimation unit 132, the generation unit 133, and a simulation unit 134, and may implement or execute action of information processing described hereinafter. The internal configuration of the control unit 130 is not limited to the configuration illustrated in FIG. 2, and may be any other configuration that performs the information processing described later. Furthermore, these functional units represent functions of the control unit 130 and are not necessarily differentiated physically.

### Obtainment Unit 131

The obtainment unit 131 obtains values of the individual predatory behavior parameters indicating features of predatory behavior for feed by an individual fish. Specifically, the obtainment unit 131 obtains, as values of the individual predatory behavior parameters, information indicating a size of an individual fish, a size of feed predated by the individual fish, a range in which the individual fish is able to find the feed, a distance between the individual fish and the feed at the time the feed is found by the individual fish, a relation between in-water falling speed of the feed predated by the individual fish and quantity of predated feed predated at one time by the individual fish, a relation between quantity of predated feed predated by the individual fish and the size of the individual fish, and a type of feed predated by the individual feed from plural different types of feed. More specifically, the obtainment unit 131 obtains measured values of the individual predatory behavior parameters for each fish species. For example, the obtainment unit 131 obtains measured values of the individual predatory behavior parameters that have been actually measured for each fish species input by a user via an input unit.

Furthermore, the obtainment unit 131 obtains values of the small fish group predatory behavior parameters indicating features of predatory behavior for feed by an individual fish belonging to a small fish group including a small number of individual fish. Specifically, the obtainment unit 131 obtains, as values of the small fish group predatory behavior parameters, information indicating the number of other individual fish positioned around an individual fish, a speed of the individual fish advancing toward feed when the feed is found by the individual fish, time intervals at which the individual fish predates the feed, and a quantity of predated feed predated at one time by the individual fish. More specifically, the obtainment unit 131 obtains measured values of the small fish group predatory behavior parameters for each fish species. For example, the obtainment unit 131 obtains measured values of the small fish group predatory behavior parameters that have been actually measured for each fish species input by a user via an input unit.

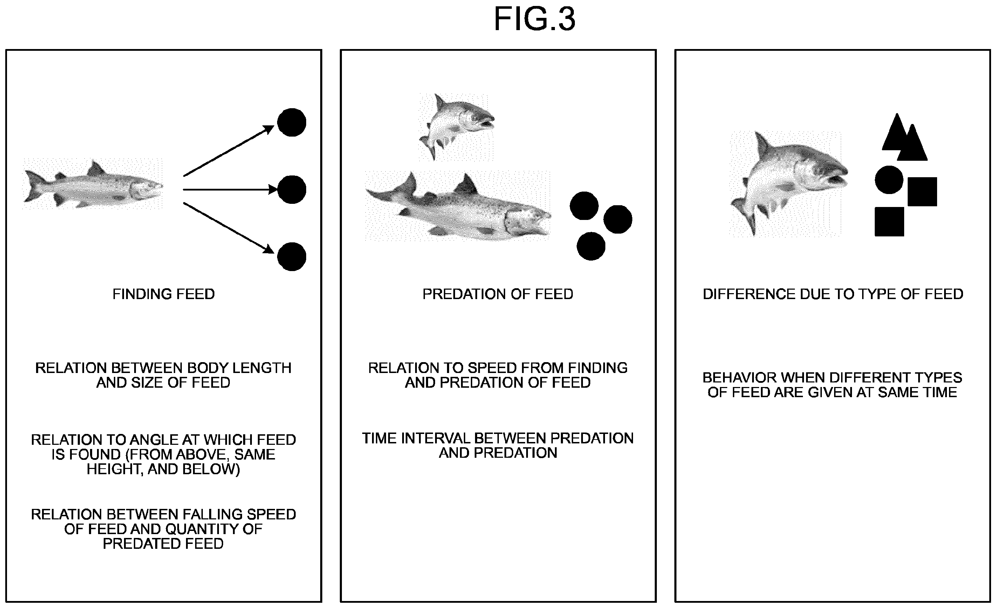

FIG. 3 is a diagram illustrating an example of the individual predatory behavior parameters and the small fish group predatory behavior parameters, according to the embodiment. "Finding feed" illustrated in FIG. 3 represents one example of the individual predatory behavior parameters. For example, a correlation is known to exist between body length (size) of individual fish and size of feed. The obtainment unit 131 thus obtains, as one example of the individual predatory behavior parameters, measured values of sizes of individual fish and sizes of feed predated by the individual fish. Furthermore, the range in which an individual fish is able to find feed is known to differ depending on the positions of the eyes of the fish and the shapes of the eyes. The obtainment unit 131 thus obtains as one example of the individual predatory behavior parameters, measured values of the range in which an individual fish is able to find the feed, for each fish species. For example, the obtainment unit 131 obtains, as one example of the measured values of the range in which the individual fish is able to find the feed, positions of eyes of the fish, a viewing angle of the fish, and a distance between the individual fish and the feed at the time the feed is found by the fish, for each fish species. Furthermore, a correlation is known to exist between in-water falling speed of feed predated by an individual fish and quantity of predated feed predated at one time by the individual fish. The obtainment unit 131 thus obtains, for each fish species, measured values indicating a relation between in-water falling speed of feed predated by an individual fish and quantity of predated feed predated at one time by the individual fish. For example, the obtainment unit 131 obtains, as the measured values indicating the relation between the in-water falling speed of the feed predated by the individual fish and the quantity of predated feed predated at one time by the individual fish, measured values indicating that the quantity of predated feed predated at one time by the individual fish is reduced by a certain quantity (a measured value) every time the in-water falling speed of the feed decreases by a certain speed (a measured value).

Furthermore, "Difference depending on type of feed" illustrated in FIG. 3 represents an example of the individual predatory behavior parameters. For example, in a case where plural different types of feed are given at the same time, which type/types of feed an individual fish prefers to eat is considered to differ from fish species to fish species. Therefore, the obtainment unit 131 obtains, for each fish species, information indicating the type/types of feed predated by the individual fish from the plural different types of feed. Furthermore, although illustration thereof is omitted, a correlation is known to exist between quantity of predated feed predated by an individual fish and size of the individual fish. The obtainment unit 131 thus obtains, for each fish species, measured values indicating a relation between quantity of predated feed predated by an individual fish and size of the individual fish. For example, the obtainment unit 131 obtains, as the measured values indicating the relation between the quantity of predated feed predated by the individual fish and the size of the individual fish, measured values indicating that the size of the individual fish increases by a certain size (a measured value) per certain quantity (a measured value) of predated feed predated by the individual fish.

Furthermore, "Predating feed" illustrated in FIG. 3 represents an example of the small fish group predatory behavior parameters. For example, a correlation is presumed to exist between the number of other individual fish positioned around an individual fish and speed of the individual fish heading toward feed at the time the feed is found by the individual fish. For example, because the competition rate for feed is higher when other individual fish are present around an individual fish than when the individual fish is alone, the speed of the individual fish advancing toward the feed when the feed is found by the individual fish is presumed to be faster when the other individual fish are present around the individual fish. Therefore, the obtainment unit 131 obtains, for each fish species, measured values of: the number of other individual fish positioned around individual fish; and a speed of the individual fish advancing toward the feed when the feed is found by the individual fish. For example, as an example of the number of the other individual fish positioned around the individual fish, the obtainment unit 131 obtains a measured value of the number of the other individual fish positioned in a predetermined range from the position of the individual fish. Furthermore, a correlation is presumed to exist between: the number of other individual fish positioned around an individual fish; and time intervals at which the individual fish predates the feed and quantity of predated feed predated at one time by the individual fish. For example, because the competition rate for feed is higher when other individual fish are present around the individual fish than when the individual fish is alone; the time interval between the first predation and the next predation by the individual fish is presumed to be shorter and the quantity of predated feed predated at one time by the individual fish is presumed to be larger, when the other individual fish are present around the individual fish. Therefore, the obtainment unit 131 obtains, for each fish species, measured values of the number of the other individual fish positioned around the individual fish, the time intervals at which the feed is predated by the individual fish, and the quantity of predated feed predated at one time by the individual fish.

Furthermore, the obtainment unit 131 obtains values of the feeding parameters indicating features of a feeding method for a large fish group. The obtainment unit 131 obtains, as the values of the feeding parameters, information indicating a size of feed fed to the large fish group, a weight of the feed, a shape of the feed, an in-water falling speed of the feed, the initial position of the feed in water of a fishpond where the large fish group is, the initial speed of the feed, a direction in which the feed is released, magnitude of force by which the feed is pushed out when the feed is released, the number of times the feed is dividedly tossed in feeding of one time, time intervals at which the feed is dividedly tossed in the feeding of one time, and a quantity of the feed tossed at one time when the feed is dividedly tossed in the feeding of one time. For example, the obtainment unit 131 obtains values of the feeding parameters input by a user via an input unit.

### Estimation Unit 132

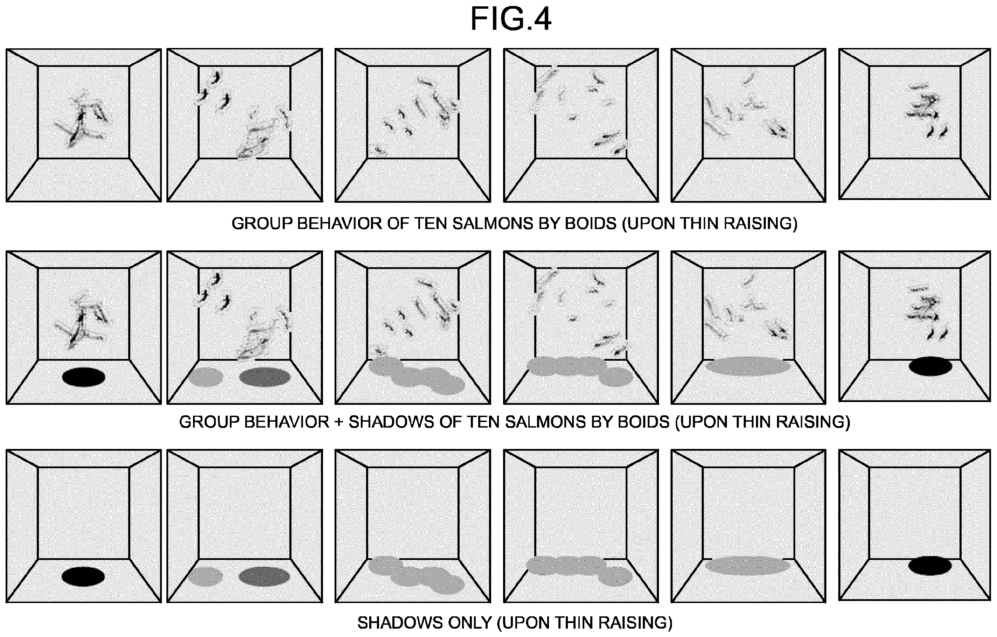

The estimation unit 132 generates a machine learning model that has been trained to estimate a fish count in a fish group and a body length of a fish belonging to the fish group, from a captured image. The estimation unit 132 automatically generates Boids simulation images of various patterns by computer graphics, the various patterns resulting from changes in the three rules (that is, the Boids parameters) for Boids simulations. FIG. 4 is a diagram illustrating an example of training data for the machine learning model for estimation of a fish count in a fishpond, according to the embodiment. In a case described with respect to the example illustrated in FIG. 4, an individual fish that is an object (a Boid) that moves like a fish group by means of a Boids simulation program is a salmon. The top row in FIG. 4 illustrates Boids simulation images of ten fish swimming in a virtual space simulating a fishpond. The middle row in FIG. 4 illustrates images including, in addition to ten fish in a Boids simulation, the ten fish being the same as those in the top row of FIG. 4, shadows of the ten fish in the Boids simulation. The bottom row in FIG. 4 illustrates images having the shadows of the fish remaining after deletion of the ten fish from the images in the middle row of FIG. 4.

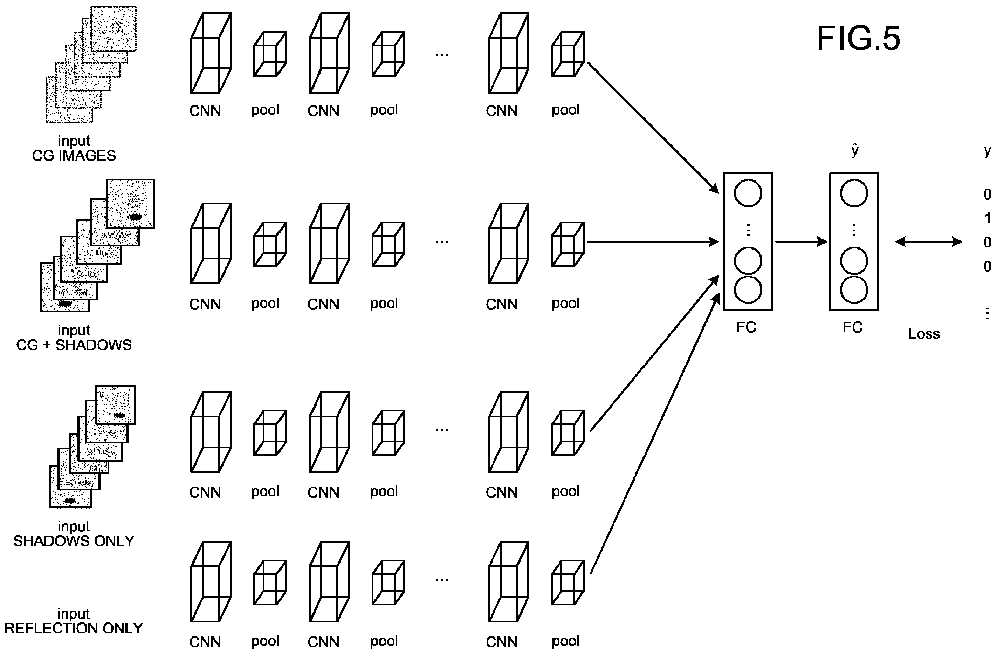

FIG. 5 is a diagram illustrating an example of a process of generating the machine learning model for the estimation of a fish count in a fishpond, according to the embodiment. The estimation unit 132 performs machine learning (supervised learning) in a deep neural network (DNN) with input data and correct answer data serving as training data. As illustrated in FIG. 5, the estimation unit 132 generates a machine learning model resulting from full connection of four deep neural networks in a fully connected layer. Specifically, the estimation unit 132 respectively inputs, as sets of input data, to the four deep neural networks included in the machine learning model: Boids simulation images like those illustrated in the upper row of FIG. 4, Boids simulation images including shadows of fish like those illustrated in the middle row of FIG. 4, simulation images of only the shadows of the fish like those illustrated in the bottom row of FIG. 4, and reflection images (not illustrated in the drawings) of the fish reflected on a water surface or wall surface of a virtual space simulating a fishpond. The estimation unit 132 trains the machine learning model such that the error between output data output from the fully connected layer of the machine learning model and the correct answer data is minimized. The correct answer data for the machine learning model are the numbers of the fish and sizes of the fish included in the Boids simulation images and these correct answer data may be obtained as values of parameters used in generation of the Boids simulation images.

Furthermore, the estimation unit 132 obtains values of group parameters set for a simulation model based on statistical nature of a group. Specifically, the estimation unit 132 obtains, as an example of the group parameters, values of Boids parameters set for a Boids simulation. Upon obtainment of the values of the Boids parameters, the estimation unit 132 corrects the values of the Boids parameters until a difference satisfies a preset condition, and obtains corrected values of the Boids parameters that have been corrected until the condition has been satisfied, the difference being between: a captured image having, captured therein, a large fish group in an actual fishpond; and a Boids simulation image of the large fish group.

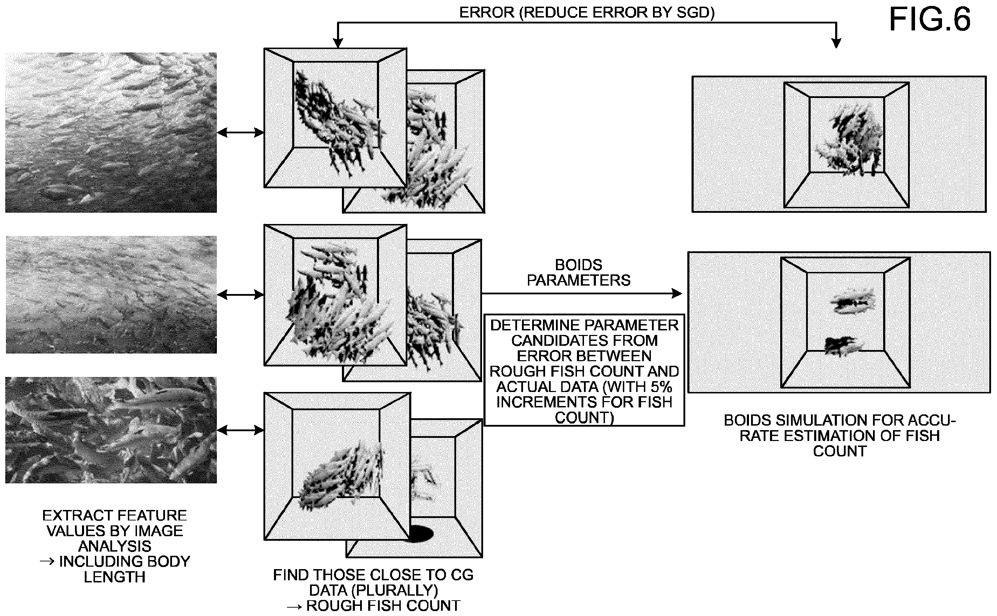

FIG. 6 is a diagram illustrating an example of a process of correcting the values of the Boids parameters, according to the embodiment. As illustrated in FIG. 6, the estimation unit 132 generates Boids simulation images of large fish groups having different fish counts, on the basis of the obtained values of the Boids parameters. For example, the estimation unit 132 generates the Boids simulation images by using computer graphics technology. Subsequently, the estimation unit 132 calculates differences between the Boids simulation images generated and captured images having, captured therein, large fish groups being fed. In a case where the differences calculated do not satisfy the preset condition, the estimation unit 132 generates Boids simulation images by correcting the values of the Boids parameters. The estimation unit 132 repeats the correction of the values of the Boids parameters and the generation of the Boids simulation images, until the differences satisfy the preset condition. The estimation unit 132 obtains the corrected values of the Boids parameters that have been corrected until the condition has been satisfied as the estimation unit 132 corrects the values of the Boids parameters until the differences satisfy the preset condition.

### Generation Unit 133

The generation unit 133 generates a group feeding simulation image of a large fish group being fed, on the basis of the values of the individual predatory behavior parameters, the values of the small fish group predatory behavior parameters, and the values of the feeding parameters, which have been obtained by the obtainment unit 131. For example, the generation unit 133 generates the group feeding simulation image by using computer graphics technology. Subsequently, the generation unit 133 calculates a difference between the group feeding simulation image generated and a captured image having, captured therein, a large fish group being fed. In a case where the difference calculated does not satisfy a preset condition, the generation unit 133 generates a group feeding simulation image by correcting the values of the parameters. The generation unit 133 repeats the correction of the values of the parameters and the generation of the group feeding simulation image until the difference satisfies the preset condition. The generation unit 133 obtains, as values of the large fish group predatory behavior parameters, the values of the parameters that have been corrected until the condition has been satisfied, as the generation unit 133 corrects the values of the parameters until the difference satisfies the preset condition.

For example, the generation unit 133 obtains, as the values of the large fish group predatory behavior parameters, information indicating a size of an individual fish belonging to a large fish group, a size of feed predated by the individual fish, a range in which the individual fish is able to find the feed, a distance between the individual fish and the feed at the time the feed is found by the individual fish, a relation between in-water falling speed of the feed predated by the individual fish and quantity of predated feed predated at one time by the individual fish, a relation between quantity of predated feed predated by the individual fish and the size of the individual fish, a type of feed predated by the individual fish from plural different types of feed, a speed of the individual fish advancing toward the feed when the feed is found by the individual fish, time intervals at which the feed is predated by the individual fish, and the quantity of predated feed predated at one time by the individual fish.

Furthermore, the generation unit 133 generates a large fish group simulation program for simulation of behavior of each individual fish belonging to the large fish group, on the basis of the values of the Boids parameters obtained by the estimation unit 132 and the values of the large fish group predatory behavior parameters obtained by the generation unit 133. Specifically, the generation unit 133 generates the large fish group simulation program that has been set so that until each individual fish belonging to the large fish group finds feed, each individual fish behaves on the basis of the values of the Boids parameters obtained by the estimation unit 132. Furthermore, the simulation unit 134 generates the large fish group simulation program that has been set so that after each individual fish belonging to the large fish group has found the feed, each individual fish behaves on the basis of the values of the large fish group predatory behavior parameters obtained by the generation unit 133 For example, by changing a Boids simulation program, the generation unit 133 generates the large fish group simulation program. Upon generation of the large fish group simulation program, the generation unit 133 stores the generated large fish group simulation program into the storage unit 120.

### Simulation Unit 134

On the basis of the values of the individual predatory behavior parameters, the values of the small fish group predatory behavior parameters, and the values of the feeding parameters, which have been obtained by the obtainment unit 131, the simulation unit 134 performs a simulation of growth of each individual fish belonging the large fish group fed by a feeding method corresponding to the values of the feeding parameters. Specifically, on the basis of the values of the Boids parameters obtained by the estimation unit 132, the values of the large fish group predatory behavior parameters obtained by the generation unit 133, and the values of the feeding parameters obtained by the obtainment unit 131, the simulation unit 134 performs a simulation of growth of each individual fish belonging to the large fish group fed by a feeding method corresponding to the values of the feeding parameters.

Subsequently, the simulation unit 134 generates three-dimensional simulation imaged by using a group simulation model and a large fish group predatory behavior simulation model that have been stored in the storage unit 120. These simulation images reproduce simulation results as images viewed from a certain camera angle by use of CG technology. On the basis of the group simulation model, the simulation unit 134 generates simulation images of the large fish group for a time period up to a time point at which each individual fish belonging to the large fish group finds feed. Furthermore, on the basis of the large fish group predatory behavior simulation model, the simulation unit 134 generates simulation images of the large fish group for a time after each individual fish belonging to the large fish group has found the feed.

Furthermore, on the basis of the large fish group predatory behavior simulation model, the simulation unit 134 causes each individual fish belonging to the large fish group to grow according to the quantity of the feed predated by that individual fish. That is, on the basis of the large fish group predatory behavior simulation model, the simulation unit 134 causes each individual fish belonging to the large fish group to grow in size over time according to the quantity of the feed predated by that individual fish.

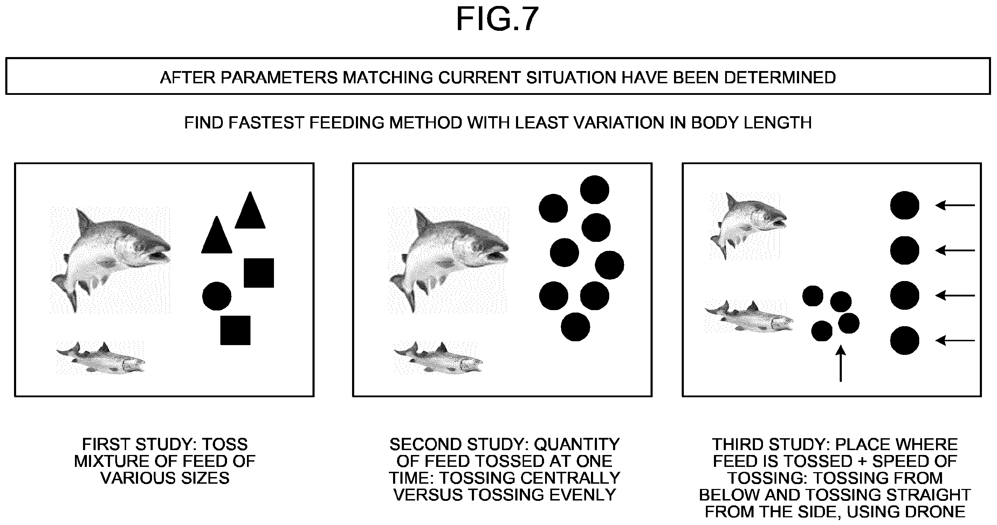

FIG. 7 is a diagram illustrating an example of feeding simulations, according to the embodiment. For "First Study: toss mixture of feed of various sizes" illustrated on the left in FIG. 7, the simulation unit 134 performs a simulation of growth of each individual fish belonging to a large fish group fed by a feeding method in which feed having plural different sizes is fed at the same time. Furthermore, for "Second Study: quantity of feed tossed at one time: tossing centrally versus tossing evenly", the simulation unit 134 performs a simulation of growth of each individual fish belonging to the large fish group fed by a feeding method in which feed is centrally tossed at once in feeding of one time. The simulation unit 134 also performs a simulation of growth of each individual fish belonging to the large fish group fed by a feeding method in which the feed is dividedly tossed in small portions in feeding of one time. Furthermore, for "Third Study: place where feed is tossed and speed of tossing: tossing from below and tossing straight from the side, using a drone", the simulation unit 134 performs a simulation of growth of each individual fish belonging to the large fish group fed by a feeding method in which the feed is tossed from below the large fish group, the feeding method using an underwater drone. The simulation unit 134 also performs a simulation of growth of each individual fish belonging to the large fish group fed by a feeding method in which the feed is tossed straight from the side relatively to the direction in which the large fish group advances, the feeding method using an underwater drone. Comparing simulation results of these simulations of the growth of each individual fish belonging to the large fish group fed by the various feeding methods illustrated in FIG. 7 enables a feeding method to be found, the feeding method minimizing the variation in size of individual fish that have grown the fastest.

### 4. Effects

As described above, the information processing apparatus 100 according to the embodiment includes the obtainment unit 131 and the simulation unit 134. The obtainment unit 131 obtains values of the individual predatory behavior parameters indicating features of predatory behavior for feed by an individual fish, values of the small fish group predatory behavior parameters indicating features of predatory behavior for feed by an individual fish belonging to a small fish group including a small number of individual fish, and values of the feeding parameters indicating features of a feeding method for a large fish group including a large number of individual fish, the large number being larger than the small number. On the basis of the values of the individual predatory behavior parameters, the values of the small fish group predatory behavior parameters, and the values of the feeding parameters, which have been obtained by the obtainment unit 131, the simulation unit 134 performs a simulation of growth of each individual fish belonging the large fish group fed by a feeding method corresponding to the values of the feeding parameters.

The information processing apparatus 100 thereby enables the optimum values of the feeding parameters (that is, the optimum feeding method) to be found, the optimum values solving various problems related to feeding in farms. For example, the information processing apparatus 100 enables a feeding method to be found, the feeding method minimizing variation in size of individual fish that have grown in the shortest period of time. Therefore, the information processing apparatus 100 enables improvement of the fish cultivation technology.

Furthermore, the obtainment unit 131 obtains, as the values of the individual predatory behavior parameters, information indicating a size of the individual fish, a size of feed predated by the individual fish, a range in which the individual fish is able to find the feed, a distance between the individual fish and the feed at the time the feed is found by the individual fish, a relation between in-water falling speed of the feed predated by the individual fish and quantity of predated feed predated at one time by the individual fish, a relation between quantity of predated feed predated by the individual fish and the size of the individual fish, and a type of feed predated by the individual fish from plural different types of feed.

The information processing apparatus 100 thereby enables the simulation of the growth of the individual fish belonging to the large fish group in consideration of features of the predatory behavior for the feed by the individual fish and thus enables obtainment of simulation results that are more accurate.

Furthermore, the obtainment unit 131 obtains, as the values of the small fish school predatory behavior parameters, information indicating the number of other individual fish positioned around the individual fish, a speed of the individual fish advancing toward the feed when the feed is found by the individual fish, time intervals at which the individual fish predates the feed, and a quantity of predated feed predated at one time by the individual fish.

Because the competition rates for predating the feed generally differ between predatory behavior for the feed when there is one individual fish and in a case where other individual fish are present around the individual fish, the predatory behavior for feed may also differ between these two cases. In view of this, the information processing apparatus 100 enables a simulation of growth of each individual fish belonging to a large fish group in consideration of, in addition to features of predatory behavior for feed by an individual fish, features of predatory behavior for the feed by an individual fish belonging to a small fish group including a small number of individual fish. Therefore, the information processing apparatus 100 enables obtainment of simulation results that are more accurate.

Furthermore, the obtainment unit 131 obtains, for each fish species, measured values of the individual predatory behavior parameters and measured values of the small fish group predatory behavior parameters.

In general, features of predatory behavior for feed by fish differ from fish species to fish species. The information processing apparatus 100 thus performs actual measurement of the features of the predatory behavior for feed by fish for each fish species and enables obtainment of simulation results that are more accurate.

Furthermore, the obtainment unit 131 obtains, as the values of the feeding parameters, information indicating a size of the feed fed to the large fish group, a weight of the feed, a shape of the feed, an in-water falling speed of the feed, the initial position of the feed in water of the fishpond where the large fish group is, the initial speed of the feed, a direction in which the feed is released, magnitude of force by which the feed is pushed out when the feed is released, the number of times the feed is dividedly tossed in feeding of one time, time intervals at which the feed is dividedly tossed in feeding of one time, and a quantity of the feed tossed at one time when the feed is dividedly tossed in feeding of one time.

The information processing apparatus 100 thereby enables the optimum feeding method to be found, the optimum feeding method solving various problems related to feeding in farms. For example, the information processing apparatus 100 enables a feeding method to be found, the feeding method minimizing variation in size of individual fish that have grown in the shortest period of time.

Furthermore, the information processing apparatus 100 further includes the generation unit 133. The generation unit 133 generates a group feeding simulation image of the large fish group being fed, on the basis of the values of the individual predatory behavior parameters and the small fish group predatory behavior parameters, which have been obtained by the obtainment unit 131, corrects the values of the large fish group predatory behavior parameters indicating features of the predatory behavior for the feed of the individual fish belonging to the large fish group until a difference satisfies a present condition, the difference being between the generated group feeding simulation image and a captured image having, captured therein, the large fish group being fed, and obtains values of the large fish group predatory behavior parameters that have been corrected until the condition has been satisfied. On the basis of the values of the large fish group predatory behavior parameters, which have been obtained by the generation unit 133, and the values of the feeding parameters, the simulation unit 134 performs a simulation of growth of each individual fish belonging the large fish group fed by a feeding method corresponding to the values of the feeding parameters.

The information processing apparatus 100 thereby enables a feeding simulation by use of parameters of a simulation close to a state of feeding of the large fish group in the actual fishpond and thus enables obtainment of simulation results that are more accurate.

### 5. Hardware Configuration

Furthermore, the information processing apparatus 100 according to the embodiment described above is implemented by a computer 1000 configured as illustrated in FIG. 10, for example. FIG. 10 is a diagram of a hardware configuration representing an example of a computer that implements functions of the information processing apparatus 100. The computer 1000 includes a CPU 1100, a RAM 1200, a ROM 1300, an HDD 1400, a communication interface (I/F) 1500, an input and output interface (I/F) 1600, and a media interface (I/F) 1700.

The CPU 1100 operates on the basis of a program stored in the ROM 1300 or HDD 1400 and controls each unit. The ROM 1300 stores a boot program executed by the CPU 1100 upon start-up of the computer 1000 and stores a program dependent on hardware of the computer 1000, for example.

The HDD 1400 stores a program executed by the CPU 1100 and data used by the program, for example. The communication interface 1500 receives data from another device via a predetermined communication network and transmits the data to the CPU 1100, and transmits data generated by the CPU 1100, to another device via a predetermined communication network.

The CPU 1100 controls an output device, such as a display or a printer, and an input device, such as a keyboard or a mouse, via the input and output interface 1600. The CPU 1100 obtains data from the input device via the input and output interface 1600. Furthermore, the CPU 1100 outputs generated data to the output device via the input and output interface 1600.

The media interface 1700 reads a program or data stored in a recording medium 1800 and provides the program or data to the CPU 1100 via the RAM 1200. The CPU 1100 loads the program from the recording medium 1800 onto the RAM 1200 via the media interface 1700 and executes the program loaded. The recording medium 1800 may be, for example: an optical recording medium, such as a digital versatile disc (DVD) or a phase change rewritable disk (PD); a magneto-optical recording medium, such as a magneto-optical disk (MO); a tape medium; a magnetic recording medium; or a semiconductor memory.

For example, in a case where the computer 1000 functions as the information processing apparatus 100 according to the embodiment, the CPU 1100 of the computer 1000 implements functions of the control unit 130 by executing programs loaded on the RAM 1200. The CPU 1100 of the computer 1000 reads and executes these programs from the recording medium 1800 but in another example, the CPU 1100 may obtain these programs from another device via a predetermined communication network.

Some embodiments of the present application have been described in detail on the basis of the drawings, but these are just examples, and the present invention may be implemented in any other mode, to which any of various modifications and improvements have been made on the basis of the modes described in the disclosure of the invention section and knowledge of those skilled in the art.

### 6. Others

Of the processing described with respect to the above embodiments and modified examples, all or part of the processing described as being performed automatically may be performed manually, or all or part of the processing described as being performed manually may be performed automatically by a publicly known method. In addition, the sequences of the processing, the specific names, and the information including the various data and parameters, which have been described above and illustrated in the drawings, may be optionally modified unless otherwise particularly stated. For example, the various types of information illustrated in the drawings are not limited to the information illustrated therein.

Furthermore, the components of each apparatus/device in the drawings have been illustrated functionally and conceptually, and are not necessarily physically configured as illustrated in the drawings. That is, specific forms of separation and integration of the apparatuses/devices are not limited only to those illustrated in the drawings, and all or part of the apparatuses/devices may be configured to be functionally or physically separated or integrated in any units according to various loads and use situations.

Furthermore, the embodiments and modified examples described above may be combined, as appropriate, so long as no contradictions in the processing arise from the combination.

Furthermore, any "section", "module", or "unit" described above may be read as a "means" or "circuit", for example. For example, a generation unit may be read as a generation means or a generation circuit.

### Reference Signs List

- 100: INFORMATION PROCESSING APPARATUS

- 110: COMMUNICATION UNIT
- 120: STORAGE UNIT
- 130: CONTROL UNIT
- 131: OBTAINMENT UNIT
- 132: ESTIMATION UNIT
- 133: GENERATION UNIT
- 134: SIMULATION UNIT

## Claims

1. An information processing method executed by a computer, the information processing method including:
an obtainment step of obtaining values of individual predatory behavior parameters indicating features of predatory behavior for feed by an individual fish, values of small fish group predatory behavior parameters indicating features of predatory behavior for feed by the individual fish belonging to a small fish group including a small number of the individual fish, and values of feeding parameters indicating features of a feeding method for a large fish group including a large number of the individual fish, the large number being larger than the small number; and
a simulation step of performing, on the basis of the values of the individual predatory behavior parameters, the values of the small fish group predatory behavior parameters, and the values of the feeding parameters that have been obtained by the obtainment step, a simulation of growth of each of the individual fish belonging to the large fish group fed by a feeding method corresponding to the values of the feeding parameters, wherein the information processing method further includes:
a generation step of generating, on the basis of the values of the individual predatory behavior parameters and the small fish group predatory behavior parameters obtained by the obtainment step, a group feeding simulation image of the large fish group being fed, correcting values of large fish group predatory behavior parameters indicating features of predatory behavior for the feed by the individual fish belonging to the large fish group until a difference satisfies a preset condition, the difference being between the generated group feeding simulation image and a captured image having, captured therein, the large fish group being fed, and obtaining values of the large fish group predatory behavior parameters, the values having been corrected until the condition has been satisfied, wherein
in the simulation step, a simulation of growth of the individual fish belonging to the large fish group fed by a feeding method corresponding to the values of the feeding parameters is performed on the basis of the values of the large fish group predatory behavior parameters obtained by the generation step and the values of the feeding parameters.

2. The information processing method according to claim 1, wherein in the obtainment step, information is obtained as the values of the individual predatory behavior parameters, the information indicating a size of the individual fish, a size of feed predated by the individual fish, a range in which the individual fish is able to find the feed, a distance between the individual fish and the feed when the feed is found by the individual fish, a relation between in-water falling speed of the feed predated by the individual fish and quantity of predated feed predated at one time by the individual fish, a relation between quantity of predated feed predated by the individual fish and the size of the individual fish, and a type of feed predated by the individual fish from plural different types of feed.

3. The information processing method according to claim 1 or 2, wherein in the obtainment step, information is obtained as the values of the small fish group predatory behavior parameters, the information indicating the number of other individual fish positioned around the individual fish, a speed of the individual fish advancing toward the feed when the feed is found by the individual fish, time intervals at which the individual fish predates the feed, and a quantity of predated feed predated at one time by the individual fish.

4. The information processing method according to any one of claims 1 to 3, wherein in the obtainment step, measured values of the individual predatory behavior parameters and measured values of the small fish group predatory behavior parameters are obtained for each fish species.

5. The information processing method according to any one of claims 1 to 4, wherein in the obtainment step, information is obtained as the values of the feeding parameters, the information indicating a size of feed fed to the large fish group, a weight of the feed, a shape of the feed, an in-water falling speed of the feed, the initial position of the feed in water of a fishpond where the large fish group is, the initial speed of the feed, a direction in which the feed is released, magnitude of force by which the feed is pushed out when the feed is released, the number of times the feed is dividedly tossed in feeding of one time, time intervals at which the feed is dividedly tossed in the feeding of one time, and a quantity of the feed tossed at one time when the feed is dividedly tossed in the feeding of one time.

6. An information processing program that causes a computer to execute the method of any one of claims 1 to 5.

7. An information processing apparatus (100) comprising means (131, 132, 133, 134) for carrying out the method of any one of claims 1 to 5.

## Patentansprüche

1. Ein Informationsverarbeitungsverfahren, das von einem Computer ausgeführt wird, wobei das Informationsverarbeitungsverfahren umfasst:
einen Beschaffungsschritt des Beschaffens von Werten von Parametern eines individuellen Raubverhaltens, die Merkmale des Raubverhaltens für Futter durch einen einzelnen Fisch anzeigen, von Werten von Parametern des Raubverhaltens einer kleinen Fischgruppe, die Merkmale des Raubverhaltens für Futter durch den einzelnen Fisch anzeigen, der zu einer kleinen Fischgruppe gehört, die eine kleine Anzahl der einzelnen Fische enthält, und von Werten von Fütterungsparametern, die Merkmale eines Fütterungsverfahrens für eine große Fischgruppe anzeigen, die eine große Anzahl der einzelnen Fische enthält, wobei die große Anzahl größer als die kleine Anzahl ist; und
einen Simulationsschritt des Durchführens einer Simulation des Wachstums jedes einzelnen Fisches, der zu der großen Fischgruppe gehört, der durch ein Fütterungsverfahren gefüttert wird, das den Werten der Fütterungsparameter entspricht, auf der Grundlage der Werte der Parameter des individuellen Raubverhaltens, der Werte der Parameter des Raubverhaltens der kleinen Fischgruppe und der Werte der Fütterungsparameter, die durch den Beschaffungsschritt erhalten wurden, wobei das Informationsverarbeitungsverfahren ferner umfasst:
einen Erzeugungsschritt des Erzeugens eines Gruppenfütterungssimulationsbildes der großen Fischgruppe, die gefüttert wird, auf der Grundlage der Werte der Parameter des individuellen Raubverhaltens und der Parameter des Raubverhaltens der kleinen Fischgruppe, die durch den Beschaffungsschritt erhalten wurden, des Korrigierens der Werte der Parameter des Raubverhaltens der großen Fischgruppe, die Merkmale des Raubverhaltens für das Futter durch die einzelnen Fische, die zu der großen Fischgruppe gehören, anzeigen, bis eine Differenz eine vorgegebene Bedingung erfüllt, wobei die Differenz zwischen dem erzeugten Gruppenfütterungssimulationsbild und einem aufgenommenen Bild besteht, in dem die große Fischgruppe, die gefüttert wird, aufgenommen ist, und des Erhaltens von Werten der Parameter für das Raubverhalten der großen Fischgruppe, wobei die Werte korrigiert wurden, bis die Bedingung erfüllt ist, wobei
in dem Simulationsschritt eine Simulation des Wachstums der einzelnen Fische, die zu der großen Fischgruppe gehören, die durch eine Fütterungsmethode gefüttert werden, die den Werten der Fütterungsparameter entspricht, auf der Grundlage der Werte der Parameter des Raubverhaltens der großen Fischgruppe, die durch den Erzeugungsschritt erhalten wurden, und der Werte der Fütterungsparameter durchgeführt wird.

2. Das Informationsverarbeitungsverfahren nach Anspruch 1, wobei in dem Beschaffungsschritt Informationen als die Werte der Parameter des individuellen Raubverhaltens erhalten werden, wobei die Informationen eine Größe des einzelnen Fisches, eine Größe des von dem einzelnen Fisch erbeuteten Futters, einen Bereich, in dem der einzelne Fisch das Futter finden kann, einen Abstand zwischen dem einzelnen Fisch und dem Futter, wenn das Futter von dem einzelnen Fisch gefunden wird, eine Beziehung zwischen der Fallgeschwindigkeit des von den einzelnen Fischen erbeuteten Futters im Wasser und der Menge des von den einzelnen Fischen gleichzeitig erbeuteten Futters, eine Beziehung zwischen der Menge des von den einzelnen Fischen erbeuteten Futters und der Größe der einzelnen Fische, und eine Art des von den einzelnen Fischen erbeuteten Futters aus mehreren verschiedenen Arten von Futter angeben.

3. Das Informationsverarbeitungsverfahren nach Anspruch 1 oder 2, wobei in dem Beschaffungsschritt Informationen als die Werte der Parameter des Raubverhaltens der kleinen Fischgruppe erhalten werden, wobei die Informationen die Anzahl anderer einzelner Fische, die um den einzelnen Fisch herum positioniert sind, eine Geschwindigkeit des einzelnen Fisches, der sich auf das Futter zubewegt, wenn das Futter von dem einzelnen Fisch gefunden wird, Zeitintervalle, in denen der einzelne Fisch das Futter erbeutet, und eine Menge an erbeutetem Futter, das zu einer Zeit von dem einzelnen Fisch erbeutet wird, angeben.

4. Das Informationsverarbeitungsverfahren nach einem der Ansprüche 1 bis 3, wobei im Beschaffungsschritt für jede Fischart Messwerte der einzelnen Parameter des Raubverhaltens und Messwerte der Parameter des Raubverhaltens der kleinen Fischgruppe erhoben werden.

5. Das Informationsverarbeitungsverfahren nach einem der Ansprüche 1 bis 4, wobei im Beschaffungsschritt Informationen als die Werte der Fütterungsparameter erhalten werden, wobei die Informationen eine Größe des Futters, das an die große Fischgruppe verfüttert wird, ein Gewicht des Futters, eine Form des Futters, eine Fallgeschwindigkeit des Futters im Wasser, die Anfangsposition des Futters im Wasser eines Fischteichs, in dem sich die große Fischgruppe befindet, die Anfangsgeschwindigkeit des Futters, eine Richtung, in der das Futter freigegeben wird, die Größe der Kraft, mit der das Futter beim Freigeben des Futters herausgeschoben wird, die Anzahl der Male, die das Futter bei der Fütterung des einen Mals geteilt geworfen wird, und eine Menge des Futters, die bei einem Mal geworfen wird, wenn das Futter bei der Fütterung des einen Mals geteilt geworfen wird.

6. Ein Informationsverarbeitungsprogramm, das einen Computer veranlasst, das Verfahren nach einem der Ansprüche 1 bis 5 auszuführen.

7. Ein Informationsverarbeitungsgerät (100) mit Mitteln (131, 132, 133, 134) zum Ausführen des Verfahrens nach einem der Ansprüche 1 bis 5.

## Revendications

1. Procédé de traitement d'informations exécuté par un ordinateur, le procédé de traitement d'informations comprenant :
une étape d'obtention consistant à obtenir des valeurs de paramètres de comportement alimentaire individuel indicatrices de caractéristiques de comportement alimentaire relatif à l'alimentation de poissons individuels, des valeurs de paramètres de comportement alimentaire de petit groupe de poissons indicatrices de caractéristiques de comportement alimentaire relatif à l'alimentation des poissons individuels appartenant à un petit groupe de poissons comprenant un petit nombre de poissons individuels, et des valeurs de paramètres d'alimentation indicatrices de caractéristiques d'un procédé d'alimentation pour un grand groupe de poissons comprenant un grand nombre de poissons individuels, ledit grand nombre étant supérieur audit petit nombre, et
une étape de simulation consistant à effectuer, en fonction des valeurs des paramètres de comportement alimentaire individuel, des valeurs des paramètres de comportement alimentaire de petit groupe de poissons et des valeurs des paramètres d'alimentation qui ont été obtenues par l'étape d'obtention, une simulation de la croissance de chacun des poissons individuels appartenant au grand groupe de poissons nourris selon un procédé d'alimentation correspondant aux valeurs des paramètres d'alimentation ; ledit procédé de traitement d'informations comprenant en outre :
une étape de génération consistant à générer, en fonction des valeurs des paramètres de comportement alimentaire individuel et des paramètres de comportement alimentaire de petit groupe de poissons obtenues par l'étape d'obtention, une image de simulation d'alimentation de groupe concernant le grand groupe de poissons en cours d'alimentation, à corriger les valeurs des paramètres de comportement alimentaire de grand groupe de poissons indicatrices des caractéristiques de comportement alimentaire relatif à l'alimentation des poissons individuels appartenant au grand groupe de poissons jusqu'à ce qu'une différence réponde à une condition prédéfinie, la différence étant entre l'image de simulation d'alimentation de groupe générée et une image capturée montrant le grand groupe de poissons en cours d'alimentation, et à obtenir des valeurs de paramètres de comportement alimentaire de grand groupe de poissons, les valeurs ayant été corrigées jusqu'à ce que la condition ait été satisfaite, sachant que
lors de l'étape de simulation, une simulation de la croissance des poissons individuels appartenant au grand groupe de poissons nourris selon un procédé d'alimentation correspondant aux valeurs des paramètres d'alimentation est effectuée en fonction des valeurs des paramètres de comportement alimentaire de grand groupe de poissons obtenues lors de l'étape de génération et des valeurs des paramètres d'alimentation.

2. Procédé de traitement d'informations selon la revendication 1, dans lequel, lors de l'étape d'obtention, des informations sont obtenues en tant que valeurs des paramètres individuels de comportement alimentaire, les informations étant indicatrices de la taille des poissons individuels, la taille de la nourriture consommée par les poissons individuels, une plage de distance dans laquelle les poissons individuels sont capables de trouver la nourriture, la distance entre les poissons individuels et la nourriture lorsque la nourriture est trouvée par les poissons individuels, la relation entre la vitesse de chute dans l'eau de la nourriture consommée par les poissons individuels et la quantité de nourriture consommée par les poissons individuels à un moment donné, la relation entre la quantité de nourriture consommée par les poissons individuels et la taille des poissons individuels, et le type de nourriture consommée par les poissons individuels parmi plusieurs types de nourriture différents.

3. Procédé de traitement d'informations selon la revendication 1 ou 2, dans lequel, lors de l'étape d'obtention, des informations sont obtenues en tant que valeurs des paramètres de comportement alimentaire de petit groupe de poissons, les informations étant indicatrices du nombre d'autres poissons individuels présents autour des poissons individuels, de la vitesse des poissons individuels avançant vers la nourriture lorsque la nourriture est trouvée par les poissons individuels, des intervalles de temps selon lesquels les poissons individuels consomment la nourriture, et de la quantité de nourriture consommée par les poissons individuels à un moment donné.

4. Procédé de traitement d'informations selon l'une quelconque des revendications 1 à 3, dans lequel, lors de l'étape d'obtention, des valeurs mesurées des paramètres de comportement alimentaire individuel et des valeurs mesurées des paramètres de comportement alimentaire de petit groupe de poissons sont obtenues pour chaque espèce de poisson.

5. Procédé de traitement d'informations selon l'une quelconque des revendications 1 à 4, dans lequel, lors de l'étape d'obtention, des informations sont obtenues en tant que valeurs des paramètres d'alimentation, les informations étant indicatrices de la taille de la nourriture fournie au grand groupe de poissons, du poids de la nourriture, de la forme de la nourriture, de la vitesse de chute dans l'eau de la nourriture, de la position initiale de la nourriture dans l'eau d'un bassin où se trouve le grand groupe de poissons, de la vitesse initiale de la nourriture, de la direction dans laquelle la nourriture est libérée, de l'ampleur de la force avec laquelle la nourriture est expulsée lorsqu'elle est libérée, du nombre de fois que la nourriture est jetée de manière divisée au cours d'un nourrissage unitaire, des intervalles de temps auxquels la nourriture est jetée de manière divisée au cours d'un nourrissage unitaire, et de la quantité de nourriture jetée à la fois lorsque la nourriture est jetée de manière divisée au cours d'un nourrissage unitaire.

6. Programme de traitement d'informations qui amène un ordinateur à exécuter le procédé selon l'une quelconque des revendications 1 à 5.

7. Appareil de traitement d'informations (100) comprenant des moyens (131, 132, 133, 134) pour mettre en œuvre le procédé selon l'une quelconque des revendications 1 à 5.
